Europäisches Patentamt

European Patent Office

Office européen des brevets

(11) Veröffentlichungsnummer: **0 011 189 B1**

(12) # EUROPÄISCHE PATENTSCHRIFT

(45) Veröffentlichungstag der Patentschrift:
24.03.82

(51) Int. Cl.³: **F 16 L 55/04**, F 02 M 37/22

(21) Anmeldenummer: **79104252.6**

(22) Anmeldetag: **31.10.79**

(54) **Membraneinrichtung zum Dämpfen von Schwingungen in strömenden Flüssigkeiten.**

(30) Priorität: 17.11.78 DE 2849926
17.11.78 DE 2849925

(43) Veröffentlichungstag der Anmeldung:
28.05.80 Patentblatt 80/11

(45) Bekanntmachung des Hinweises auf die Patenterteilung:
24.03.82 Patentblatt 82/12

(84) Benannte Vertragsstaaten:
DE FR GB IT

(56) Entgegenhaltungen:
AT-B-245 870
DE-A-2 324 395

(73) Patentinhaber: KNECHT Filterwerke GmbH,
Haldenstrasse 48, D-7000 Stuttgart 50 (DE)

(72) Erfinder: Frey, Günter, Hauffstrasse 10, D-7012 Fellbach
(DE)

(74) Vertreter: Pfusch, Volker, Dipl.-Ing., MAHLE GMBH,
Patentabteilung Pragstrasse 26-46,
D-7000 Stuttgart 50 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

Membraneinrichtung zum Dämpfen von Schwingungen in strömenden Flüssigkeiten

Die Erfindung betrifft eine Membraneinrichtung zum Dämpfen von Schwingungen in strömenden Flüssigkeiten.

Zur Dämpfung solcher Schwingungen werden im Stand der Technik z.B. Membranvorrichtungen eingesetzt, die folgendermassen aufgebaut sind. Die strömende schwingende Flüssigkeit wird über eine Düse auf eine an der Düsenöffnung anliegende Membran gelenkt, die der Atmosphäre zugekehrt und durch eine Feder gegen den Flüssigkeitsdruck abgestützt ist. Unter dem auf die Membran wirkenden Druck der Flüssigkeit aus der Düse, der noch unterstützt wird durch einen aus der Düse austretenden Bypass-Strom, gibt die Membran die Düsenöffnung frei und wird durch den Flüssigkeitsstrom sodann gegen die auf sie wirkende Feder schwebend gehalten. Die Membran dichtet gegenüber der Atmosphäre. Die mit dieser Vorrichtung erzielte Dämpfung befriedigt in der Praxis. Unbefriedigend und nachteilig ist jedoch der bauliche Aufwand, der getrieben werden muss. Dies gilt insbesondere bei der Dämpfung von Schwingungen in strömenden Flüssigkeiten, die gegenüber der Atmosphäre unter relativ hohem Druck stehen. Gerade auf solche Fälle soll sich die Erfindung in erster Linie beziehen. Denn in diesen Fällen muss sowohl die Membran als auch die sie belastende Feder sehr stark ausgelegt werden, da beide Teile dem vollen Differenzdruck zwischen Flüssigkeit und Atmosphäre ausgesetzt sind.

Hier eine konstruktive Vereinfachung zu finden, die die Verwendung niedrig belastbarer und damit billiger Teile ermöglicht, ist die Aufgabe der vorliegenden Erfindung. Dabei soll der Aufbau derart sein, dass die zu schaffende Membranvorrichtung insbesondere in bereits in den Flüssigkeitsleitungen vorhandenen Gehäusen, wie z.B. Gehäusen von Filtern, ohne grossen baulichen Zusatzaufwand eingesetzt werden kann.

Dabei nicht brauchbar sind z.B. im Inneren von Flüssigkeitszuführsystemen bereits bekannte Membranen wie sie in AT-B Nr. 245870 und DE-A Nr. 2324395 als Rückschlagventil beschrieben sind. Denn die Membranen nach diesen beiden Schriften wirken nicht schwingungsdämpfend, sondern dienen lediglich dazu, bei fehlendem Flüssigkeitsstrom ein Rückfliessen der Flüssigkeit zu verhindern. Bei fliessender Flüssigkeit sind sie dagegen bis zu einem das Aufbiegen der Membran begrenzenden Anschlag, an dem sie dann fest anliegen, geöffnet. Bei der AT-B Nr. 245870 ist die Membran zwar an einem Filtereinsatz angebracht, der für sich unter einem gegen die Flüssigkeitsströmung gerichteten Druck einer Feder steht. Diese Feder gibt aber unter den Schwingungen der Flüssigkeit nicht nach, sondern erfüllt lediglich den Zweck, den Filtereinsatz in dem diesen umgebenden Gehäuse zu fixieren.

Die erfindungsgemässe Aufgabe wird daher erst durch eine Membranvorrichtung mit den Merkmalen aus dem kennzeichnenden Teil des Anspruchs 1 gelöst.

Vorteilhafte und zweckmässige Ausgestaltungen der Erfindung geben die Unteransprüche wieder.

Die erfindungsgemässe Membranvorrichtung eignet sich besonders günstig zum Einbau in Kraftstoffzuleitungssysteme für Einspritzverbrennungsmotoren. Dort gerät der Kraftstoffstrom bedingt durch eine pulsierende Kraftstofförderung in der Kraftstoffpumpe nämlich in unerwünschte und daher zu dämpfende Schwingungen. Bei dem im Stand der Technik verwendeten Kraftstoffpumpen handelt es sich dabei meist um recht hoch frequente Schwingungen, die auf die Funktion und mechanische Festigkeit des Zuleitungssystems an sich keinen Einfluss haben. Die von dem Kraftstoff im Zuleitungssystem ausgehenden Schwingungen machen sich jedoch häufig als akustische Störgeräusche unangenehm bemerkbar.

Zur Dämpfung der für derartige Störgeräusche ursächlichen Kraftstoffschwingungen werden bereits Dämpfungsvorrichtungen der eingangs zum Stand der Technik beschriebenen Art in das Zuleitungssystem eingebaut. Die im letzten Unteranspruch vorgeschlagene bauliche Integration der Schwingungsdämpfenden Membranvorrichtung in das Gehäuse eines in der Kraftstoffleitung in der Regel vorhandenen Filters beschränkt den für die Aufnahme eines Dämpfers in das Kraftstoffleitungssystem zu treibenden Aufwand auf ein absolutes Minimum an zusätzlichen Bauteilen. Benötigt wird nämlich nur die erfindungsgemässe Membranvorrichtung, bestehend aus einer Membran und einer diese belastenden Feder. Da nach dem erfindungsgemässen Vorschlag die Membran voll in der sie an- und umströmenden Flüssigkeit liegt und damit nicht gegen Atmosphärendruck arbeitet, sondern vielmehr nur einem geringfügigen Differenzdruck, der in der Strömung durch die von der Membran ausgehende Drosselwirkung bestimmt wird, ausgesetzt ist, können Membran und Feder festigkeitsmässig wesentlich schwächer ausgelegt werden. Gewicht und Herstellungsaufwand für die Filtereinrichtung werden also nur unwesentlich durch den Einbau der Dämpfereinrichtung erhöht.

Ausführungsbeispiele der Erfindung zeigt die Zeichnung und zwar in:

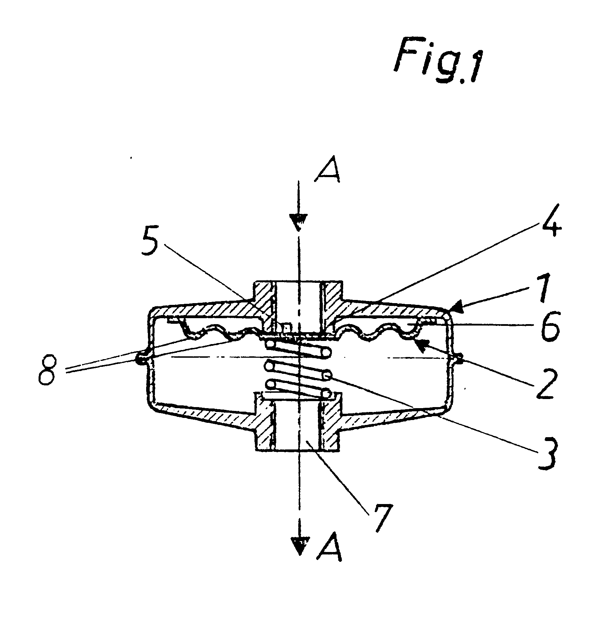

Fig. 1 einen Schnitt durch eine Membranvorrichtung mit Gehäuse zum Einbau an einer beliebigen Stelle in einer Flüssigkeitsleitung.

Fig. 2 den Schnitt durch eine in ein Filtergehäuse integrierte Membranvorrichtung.

Die erfindungsgemäss vorgeschlagene Dämpfereinrichtung ist in einem an Flüssigkeitsleitungen anschliessbaren Gehäuse 1 untergebracht. Sie besteht im wesentlichen aus einer beweglichen Membran 2, die durch eine Schraubenfeder 3 vorgespannt ist. Bei nicht vorhandenem Flüssigkeitsstrom liegt die Membran 2 an ihrem Aussenrand an dem Gehäuse 1 der Dämpfereinrichtung und in ihrem Zentrum an einem von dem Gehäuse axial in das Gehäuseinnere ragenden Rohrstutzen 4 an. Der Rohrstutzen 4 besitzt axial in den Ringraum zwischen Membran und Gehäusewand der Dämpfereinrichtung ragende Öffnungen 5, durch die die Flüssigkeit bei einsetzendem Flüssigkeitsstrom zunächst einmal den Ringraum 6 mit Flüssigkeit füllt und dadurch den erforderlichen Druck zur Verschiebung der Membran 2 gegen die Schraubenfeder 3 bewirkt. Denn erfindungsgemäss ist die Federkraft der Schraubenfeder 3 so ausgelegt, dass die Membran 2 bei einem nur über die Eintrittsöffnung des Rohrstutzens 4 wirkenden Druck der Flüssigkeit noch nicht in Richtung einer Öffnung der von der Membran 2 verschlossenen Rohrstutzenöffnung 4 verschoben wird. Während der Flüssigkeitsströmung befindet sich die Membran 2 voll im Schwebezustand und liegt nur an der Schraubenfeder 3 an. Die Flüssigkeit durchströmt die Dämpfereinrichtung in Richtung des Pfeiles A. Die Flüssigkeit gelangt über den Aussenrand der Membran 2 zur Ausgangsöffnung 7 der Dämpfereinrichtung. Die Membran 2 selbst ist auf ihrem radialen Umfang derart elastisch, dass sie nicht nur gegen die Kraft der Schraubenfeder 3, sondern auch in sich schwingen kann. Die erforderliche Eigenelastizität lässt sich besonders günstig durch das Vorsehen von umlaufenden Sicken 8 in der Membran 2 erreichen. Der freie Schwebezustand der Membran 2 bewirkt die erwünschte Dämpfung der durch die Dämpfereinrichtung strömenden unter Schwingungen stehenden Flüssigkeit recht zufriedenstellend. Das gilt insbesondere für hochfrequente Schwingungen in Flüssigkeiten wie sie z.B. von Flüssigkeitspumpen auf die gepumpte Flüssigkeit ausgeübt werden. Ein in Versuchen durchgeführter Vergleich der mit der erfindungsgemässen Einrichtung erzielten Dämpfungswirkung gegenüber derjenigen mit der zum Stand der Technik beschriebenen Einrichtung hat gezeigt, dass mit der erfindungsmässen Einrichtung mindestens ein gleich gutes, meist jedoch ein besseres Ergebnis erzielbar ist. Gegenüber dem Stand der Technik können die beweglichen Teile bei der erfindungsgemässen Ausführung jedoch festigkeitsmässig ganz erheblich schwächer ausgelegt werden, da hier nicht der Flüssigkeitsdruck gegenüber Atmosphärendruck ansteht, sondern nur eine geringe Druckdifferenz im Flüssigkeitsstrom zu überwinden ist.

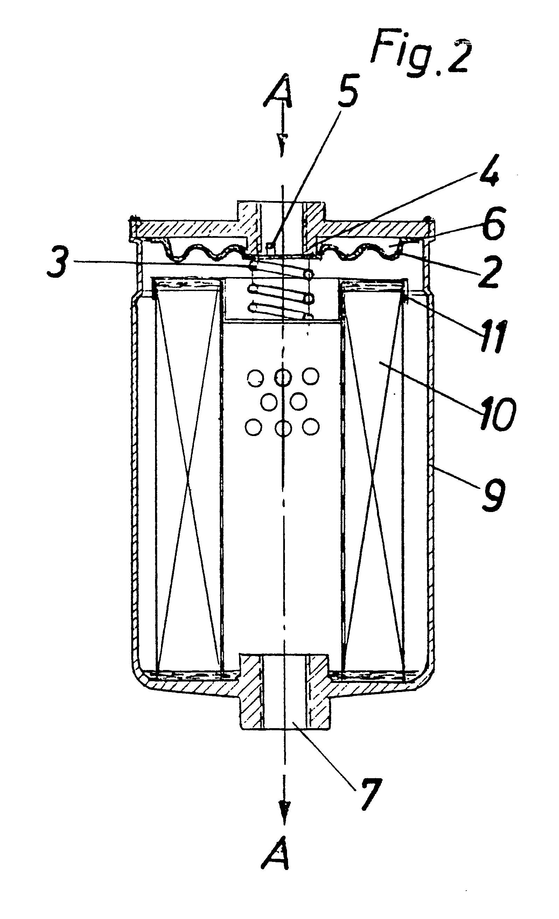

Bei dem Beispiel nach Fig. 2 ist die erfindungsgemässe Membraneinrichtung in ein Filtergehäuse eingebaut.

In dem Filtergehäuse 9, das in Richtung der Pfeile A durchströmt wird, liegt eine Filterpatrone 10, die von aussen nach innen durchströmt wird. Die Filterpatrone 10 wird an ihrer stromauf liegenden Stirnseite durch eine Endscheibe 11 abgeschlossen. Zwischen Endscheibe 11 und stromauf liegender Stirnwand des Filtergehäuses 9 befindet sich die erfindungsgemäss vorgeschlagene Dämpfereinrichtung. Sie besteht wie im ersten Beispiel aus einer beweglichen Membran 2, die durch eine Schraubenfeder 3 vorgespannt ist. Die Funktion der Membranvorrichtung entspricht derjenigen im ersten Beispiel.

## Patentansprüche

1. Vorrichtung zum Dämpfen von Schwingungen in Flüssigkeiten bestehend aus einer senkrecht zur Richtung des Flüssigkeitsstromes liegenden federbelasteten, von der Flüssigkeit radial um ihre Aussenkante herum umströmbaren Membran (2), die bei ruhender Flüssigkeit an einem eine Flüssigkeitszuföröffnung enthaltenden Flansch anliegt, gekennzeichnet durch folgende Merkmale:

a) die Membran (2) ist in ihrem Zentrum als Ventilplatte ausgebildet,

b) die Membran (2) ist zugeordnet einem die Flüssigkeit zentral auf die Ventilplatte der Membran (2) leitenden Rohrstutzen mit einer Rohrstutzenöffnung (4), der vom Flansch umgeben ist,

c) die die Membran (2) belastende Feder (3) greift an der stromab gelegenen Seite der Ventilplatte der Membran (2) an,

d) die Feder (3) ist so ausgelegt, dass die Membran (2) bei ruhender Flüssigkeit innen mit ihrer Ventilplatte die Rohrstutzenöffnung (4) sperrt und an ihrem äusseren Umfang derart an dem die Rohrstutzenöffnung (4) umgebenden Flansch anliegt, dass der Raum zwischen Flansch, Membran und Rohrstutzen einen Ringraum darstellt,

e) bei ruhender Flüssigkeit verbinden Bypass-Öffnungen (5) einen zwischen der Membranaussenkante und dem Rohrstutzen (4) liegenden Ringraum (6) mit der stromauf der von der Membran (2) gebildeten Ventilplatte gelegenen Flüssigkeit.

2. Vorrichtung nach Anspruch 1, dadurch gekennzeichnet, dass die Membran (2) zur Erhöhung ihrer Elastizität mit umlaufenden Sicken (8) versehen ist.

3. Vorrichtung nach einem der beiden Ansprüche 1 oder 2, dadurch gekennzeichnet, dass sie die Eintrittsseite eines zum Einbau in Kraftstoffzuleitungssysteme für Einspritz-Verbrennungsmotoren bestimmten Kraftstoffilters mit zylindrischer Filterpatrone (10) bildet, wobei sich die an der Membran (2) anliegende Schraubenfeder (3) direkt an der in dem Filtergehäuse (9) liegenden Filterpatrone (10) abstützt.

## Claims

1. A diaphragm device for damping vibrations in liquids, comprising a spring-loaded diaphragm (2) lying perpendicularly of the direction of the liquid flow and around which liquid flow can take place radially about its outer edge and which in absence of liquid flow rests on a flange which surrounds a liquid inlet opening characterised by

(a) the central part of the diaphragm (2) is designed as a valve plate,

(b) the diaphragm (2) is placed opposite the opening of a inlet device (4) from which the liquid gets towards the valve plate of the diaphragm (2)

(c) the spring (3) which loads the diaphragm (2), engages the valve plate on its downstream side,

(d) the spring (3) is designed as to close the opening of the inlet device (4) with the valve plate of the diaphragm (2) in absence of a liquid flow in which condition there is an annulus space (6) between the diaphragm (2), which seats with its peripheral margin at the flange that surrounds the inlet device (4), the inlet device (4) itself and said flange

(e) in the absence of a liquid flow bypass-openings (5) connect said annulus space (6) with the liquid stream up the valve plate of the diaphragm (2) that seats on the opening of the inlet device (4).

2. A diaphragm device according to claim 1, characterised in that the diaphragm (2) is provided with concentric circular corrugations (8) to increase its elasticity.

3. A diaphragm device according to claim 1 or 2, characterised in that it creates the inlet part of a fuel filter with cylindrical filter cartridge (10) adapted for an injection-fuel system of an internal combustion engine and that the spring (3) which contacts the diaphragm is seated dirctly on the filter cartridge (10) within the filter housing (9).

## Revendications

1. Dispositif pour amortir les oscillations dans des fluides et comportant une membrane (2) qui, disposée perpendiculairement à la direction de circulation du fluide, montée élastiquement, et autour de la périphérie de laquelle le fluide peut passer radialement, est appliquée, lorsque ledit fluide est au repos, contre une chape percée d'un orifice d'admission dudit fluide, dispositif caractérisé par les points suivants:

a) la membrane (2) est réalisée en son centre sous la forme d'une plaque obturatrice;

b) ladite membrane (2) est associée à un manchon (4) qui, dirigeant le fluide vers le centre de la plaque obturatrice de ladite membrane (2) et comportant un orifice, est entouré par la chape;

c) le ressort (3) agissant sur ladite membrane (2) est en prise avec le côté de la plaque obturatrice de cette membrane (2) situé en aval;

d) ledit ressort (3) est conçu de telle sorte que, lorsque le fluide est au repos, ladite membrane (2) obture intérieurement par sa plaque obturatrice l'orifice du manchon (4) et qu'elle soit appliquée par sa périphérie contre la chape entourant ledit orifice dudit manchon (4), de manière que l'espace entre ladite chape, ladite membrane et ledit manchon soit un espace annulaire, et

e) lorsque le fluide est au repos, des orifices (5) de dérivation font communiquer un espace annulaire (6), situé entre la périphérie de la membrane et le manchon (4), avec le fluide se trouvant en amont de la plaque obturatrice formée par ladite membrane (2).

2. Dispositif selon la revendication 1, caractérisé par le fait que la membrane (2) comporte des ondulations circulaires (8) pour augmenter son élasticité.

3. Dispositif selon l'une des revendications 1 ou 2, caractérisé par le fait qu'il constitue le côté entrée d'un filtre de carburant équipé d'une cartouche filtrante cylindrique (10) et destiné à être incorporé dans des systèmes d'admission de carburant de moteurs à combustion interne à injection, auquel cas le ressort hélicoïdal (3) appliqué contre la membrane (2) prend directement appui contre ladite cartouche filtrante (10) logée dans le carter (9) du filtre.

Fig.1

Fig. 2